# EUROPEAN PATENT SPECIFICATION

(11) **EP 2 791 560 B1**
(45) Date of publication and mention of the grant of the patent: **11.05.2016**
(21) Application number: 12806756.8
(22) Date of filing: 03.12.2012
(51) Int. Cl.: F16K 17/04, F16K 27/02

(54) **PRESSURE RELIEF VALVE WITH PROTECTIVE CAP**
ÜBERDRUCKVENTIL MIT SCHUTZKAPPE
SOUPAPE DE SÛRETÉ DE PRESSION À CHAPEAU DE PROTECTION

(30) Priority: 12.12.2011 US 201161569505 P
(43) Date of publication of application: 22.10.2014
(73) Proprietor: Carrier Corporation, Farmington, CT 06034 (US)
(72) Inventor: KONDRK, Jason R., New York 13041 (US); ASPROVSKI, Zvonko, New York 13090 (US)
(74) Representative: Klunker . Schmitt-Nilson . Hirsch
(86) International application number: PCT/US2012/067516
(87) International publication number: WO 2013/090036

(56) References cited:
- WO-A1-2008/054383
- DE-A1- 4 404 350
- DE-A1-102006 021 235
- DE-U- 6 806 240
- US-A- 5 918 619
- US-B1- 6 532 987

## Description

### Background

This disclosure relates generally to pressure relief valves and, more particularly to a pressure relief valve having a protective cap for limiting potential exposure of personnel in proximity to the pressure relief valve to high pressure fluid in the event the pressure relief valve actuates.

Pressure relief valves are commonly installed as over-pressure regulation devices on closed systems wherein a fluid is contained or circulated under high pressure. These pressure relief valves may be single use or multiple use valves. Single use pressure relief valves, such as, for example, rupture disc pressure relief valves, are designed to open to relieve an over pressure condition, but not close afterward. Multiple use pressure relief valves, such as for example spring-loaded pressure relief valves, are designed to open to relieve an over pressure condition and to close and reseat when the over pressure condition has been relieved. In either design, the pressure relief valve is threaded to a nipple defining a flow passage in fluid flow communication with the closed system.

Pressure relief valves are used in high-pressure refrigerant vapor compression systems wherein a high pressure refrigerant is circulated through a flow circuit. In a conventional refrigerant vapor compression system, a refrigerant is pressurized by a compressor and circulated through a refrigerant circuit including a refrigerant heat rejection heat exchanger, an evaporator expansion device, and a refrigerant heat absorption heat exchanger, interconnected in serial flow relationship by tubing forming the refrigerant circuit. Some refrigerant vapor compression systems further include an economizer, typically disposed in the refrigerant circuit between the refrigerant heat rejection heat exchanger and the refrigerant heat absorption heat exchanger, together with an associated economizer expansion device. The fluid pressure developed within the refrigerant circuit largely depends upon the characteristics of the particular refrigerant within the system. For example, a refrigerant vapor compression system charged with carbon dioxide refrigerant will generally operate in a transcritical cycle and fluid pressure within the high side of the refrigerant circuit can exceed 15.51 Mpa (2250 pounds per inch) gauge.

Conventional rupture disc pressure relief valves commonly used in connection with refrigerant vapor compression systems are typically provided with a single vent hole disposed to discharge the high pressure refrigerant vapor passing therethrough as an axially directed stream. Therefore, in the event of an over pressure condition, when the pressure relief valve actuates, the high pressure refrigerant vented through the valve chamber of the pressure relief valve exits either as a single high pressure stream directly axially outwardly parallel to the longitudinal axis of the valve (that is upwardly for vertically installed valve or horizontally for a horizontally installed valve) or radially outwardly perpendicular to the longitudinal axis of the valve.

US 6 532 987 B1 shows a relief valve having a cylindrical case with one side thereof communicated with a fluid-pressure source, a relief piston accommodated in the cylindrical case and slidable therein, a return spring for pressing the relief piston against the fluid-pressure source, a damper chamber provided on a rear-surface side of the relief piston, said damper chamber communicated with the fluid-pressure source through an orifice of the relief piston and used for displaying a buffer action against an operation of the relief piston, and a relief hole bored through a wall of the cylindrical case, the relief hole communicated with the fluid-pressure source when the relief piston retreats due to an increase in pressure generated by the fluid-pressure source.

DE 10 2006 021 235 A1 shows a valve that has a flexible sealing membrane clamped at its outer edge by a clamping unit for protecting an axial guiding between a guiding unit and a valve cone. The sealing membrane is fixed to an inner circumference by the clamping unit in a cavity of a valve hood. A circumferential circular clamping surface is formed on a side of the membrane on a cavity wall in the cavity by a separate, fixedly inserted piece. The edge of the membrane is clamped against the surface by a circular counterpiece that is arranged on another side of the membrane.

US 5 918 619 A shows a safety pressure relief valve assembly wherein the safety pressure relief valve assembly has a first tubular body with a first end and a second end, a valve seat in the internal flange, a valve member adapted for resting on the seat and having a stem extending from one side of the valve member, a biasing means for biasing the valve member against the valve seat in a direction toward the first end, a discharge means in the second end having an enclosing flange for the second end.

DE 68 06 240 U shows a safety valve particularly for connection to producers of hot steam and hot water, comprising a valve conus closing a valve seat of the valve housing, the valve conus being pressed onto the valve seat by a valve spring force and being lifted by a pressure exceeding the valve spring force, such that the pressure medium exits through outlet ports positioned in the valve housing.

### Summary

In an aspect, a pressure relief valve for use in connection with a high pressure fluid system has a protective cap for limiting the exposure of personnel to high pressure fluid venting from the pressure relief valve. The protective cap includes a skirt flange for deflecting the streams of high pressure fluid venting from the pressure relief valve away from an outwardly directed path.

Further exemplary embodiments of the invention are disclosed in the following numbered paragraphs:
1. A pressure relief valve for use in connection with a high pressure fluid system, said pressure relief valve comprising a protective cap for limiting the exposure of personnel to a high pressure fluid venting from the pressure relief valve in response to an over pressure condition within the fluid system.
2. The pressure relief valve as set forth in paragraph 1 wherein said protective cap includes a skirt flange disposed to deflect the high pressure fluid venting from the pressure relief valve.
3. The pressure relief valve as set forth in paragraph 2 further comprising a valve body having at least one vent hole establishing fluid flow communication between a valve chamber and an environment external of said valve body, said protective cap mounted to said valve body with said skirt flange defining a surface juxtaposed opposite the at least one vent hole for deflecting the high pressure fluid venting through the at least vent hole along an exterior of said valve body.
4. The pressure relief valve as set forth in paragraph 1 installed on a transport refrigeration unit having a refrigeration vapor compression system charged with carbon dioxide as a refrigerant.
5. The pressure relief valve as set forth in paragraph 1 wherein said pressure relief valve comprises a spring-loaded pressure relief valve.
6. The pressure relief valve as set forth in paragraph 1 wherein said pressure relief valve comprises a rupture disc pressure relief valve.

In an embodiment, a pressure relief valve for use in connection with a high pressure fluid system includes a valve body extending along a longitudinal axis and defining a valve chamber, and a protective valve cap. The valve body has a distal end having at least one vent hole opening through the distal end. The vent hole defines a fluid flow passage for venting high pressure fluid from the valve chamber to an environment exterior of the valve body in a direction generally transverse to the longitudinal axis. The protective cap is mounted to the distal end of the valve body and has a skirt flange disposed in spaced relationship to the distal end of the valve body. The skirt flange defines a surface juxtaposed opposite the at least one vent hole.

In an embodiment, the protective cap has a cylindrical cap body secured to the distal end of the valve body, the cap body having a closed base end and an open end, the skirt flange extending circumferentially about the open end of the cap body. The protective cap may be secured directly to the valve body by threading the cap body directly to the distal end of the valve body or indirectly by threading the cap body to a compression spring loading set screw and threading the set screw directly to the distal end of the valve body. In an embodiment, the compression spring loading set screw is formed integrally with the cap body.

A circumferential seal member may be disposed between an inner circumferential surface of the cap body and an outer circumferential surface of the distal end of the valve body. In an embodiment, the circumferential seal member is a compressible O-ring seal.

### Brief Description of the Drawings

For a further understanding of the disclosure, reference will be made to the following detailed description which is to be read in connection with the accompanying drawing, where:
FIG. 1 is a side elevation view of an embodiment of a pressure relief valve as disclosed herein mounted to a fluid flow conduit;
FIG. 2 is a side elevation view of the embodiment of FIG. 1, with the proximal portion of the pressure relief valve in section and illustrating the pressure relief valve in a sealed condition;
FIG. 3 is a side elevation view, partly in section, illustrating an embodiment of the distal end of the pressure relief valve shown in FIG. 1;
FIG. 4 is a side elevation view, partly in section, illustrating another embodiment of the distal end of the pressure relief valve shown in FIG. 1;
FIG. 5 is a side elevation view, partly in section, illustrating a further embodiment of the distal end of the pressure relief valve shown in FIG. 1;
FIG. 6 is a side elevation view, partly in section, illustrating another embodiment of the protective cap of the pressure relief valve disclosed herein;
FIG. 7 is a side elevation view of a further embodiment of the pressure relief valve disclosed herein; and
FIG. 8 is a schematic representation of a refrigerated vapor compression system equipped with a plurality of pressure relief valves for over pressure regulation.

### Detailed Description

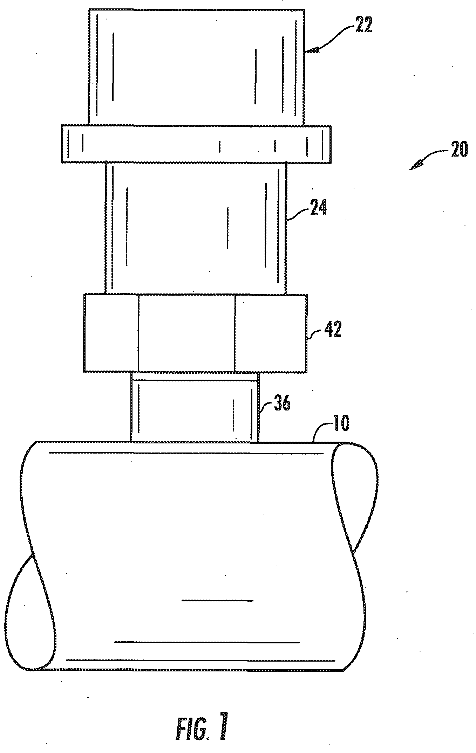

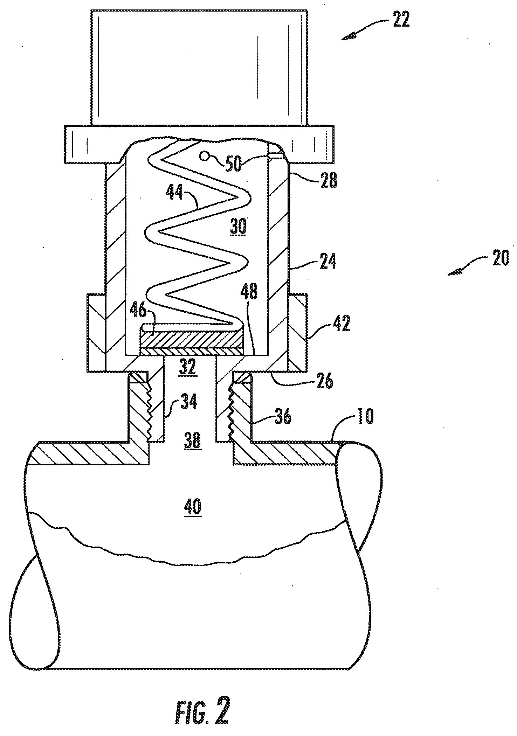

Referring initially to FIGs. 1 and 2, the pressure relief valve (PRV), designated generally by 20, is shown installed on a fluid flow conduit 10 of a closed system, such as, for example, a refrigerant conveying tube of a refrigerant circuit of a refrigerant vapor compression system. The PRV 20 disclosed herein is particularly suited for use in connection with refrigerant vapor compression systems operating at high refrigerant pressures and exposed to harsh environmental conditions such as, but not limited, to refrigerant vapor compression systems charged with carbon dioxide as a refrigerant and used in connection with transport refrigerant units for refrigerating the cargo space of a truck, trailer, sea-going container, intermodal container or other mobile refrigerated cargo box. It is to be understood, however, that the PRV 20 disclosed herein may also be used in connection with other closed systems wherein a high pressure fluid systems is contained in a tank or other vessel or circulated through a pipe, tube or other conduit.

The PRV 20 includes a protective cap 22 and an elongated valve body 24 having a proximal end, generally designated by 26, and a distal end, generally designated by 28, and defines interiorly thereto a valve chamber 30. The proximal end 26 includes a central inlet opening 32 and an axially extending, externally threaded tip 34. To install the PRV 20, the tip 34 is received by and threaded into an internally threaded nipple 36 on the fluid flow conduit 10. The nipple 36 defines a fluid flow passage 38 opening in fluid flow communication with the flow passage 40 of the fluid flow conduit 10. The central inlet opening 32 extends through the tip 34 and, when the PRV 20 is installed on the fluid flow conduit 10, is open to the fluid flow passage 38 of the nipple 36. A nut-like circumferential flange 42 may be provided on the exterior of the proximal end 26 for receiving a wrench for facilitating threading the PRV 20 into the nipple 36.

In FIGs. 2-6, the PRV 20 is shown, for purposes of illustration, but not limitation, as a spring-loaded PRV and is illustrated in FIG. 2, in a sealed condition. As in conventional spring-loaded pressure relief valves, a compression spring 44 is disposed within the valve chamber 30 coaxially with the longitudinal axis of the valve chamber 30. The compression spring 44 imposes an axially directed biasing force against a valve seal member 46 so as to force the valve seal member 46 against a valve seat 48 disposed around and about the central inlet opening 32, and thereby close the central inlet opening 32 to fluid flow. Only in the event of an over pressure condition in the fluid flow conduit 10, wherein the fluid pressure force exerted against the valve seal member 46 exceeds the opposing spring bias force exerted against the valve seal member 46, will the central inlet opening 32 open to allow high pressure fluid from the fluid flow conduit 10 to enter the valve chamber 30. The high pressure fluid passes through the valve chamber 30 to vent therefrom to the atmosphere through a plurality of vent holes 50, extending through the side wall of the valve body 24 at the distal end 28 of the PRV 20, thereby relieving the over-pressure condition. Once the pressure within the fluid flow conduit has been reduced sufficiently for the spring bias force imposed upon the valve seal member 46 to again exceed the opposing fluid pressure force exerted on the valve seal member 46, the valve seal member 46 will reseat against the valve seat 48 and again close the central inlet opening 32.

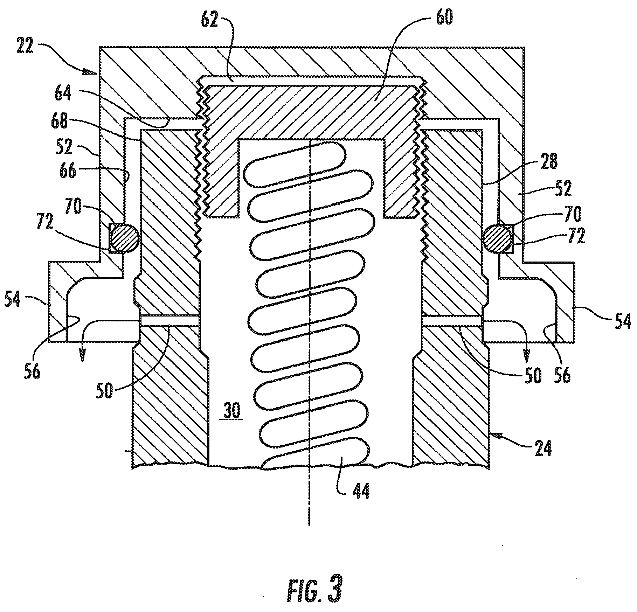

Referring to FIG. 3 in particular, the distal end of the compression spring 44 abuts a selectively adjustable set screw 60. The open distal end 28 of the valve body 24 is provided with internal threads and the set screw 60 is provided with external threads whereby the set screw 60 may be threaded into the open distal end 28 of the valve body 24. The spring bias force imposed upon the valve seal member may be selectively adjusted, as in conventional spring-loaded pressure relief valves, by threading the set screw 60 deeper into the open distal end 28 of the valve body 24 to increase the spring bias force by further compressing the compression spring 44 and by backing the set screw 60 further out of the open distal end 28 of the valve member 24 to decrease the spring bias force by further relaxing the compression spring 44.

As noted previously, the PRV 20 disclosed herein includes a protective cap 22. The protective cap 22 is disposed over the distal end 28 of the valve body 24 as depicted in FIGs.1 7. The protective cap 22 has a cylindrical body 52 having a closed base end and an open end and has a skirt flange 54 extending about the circumference of the open end of the cylindrical body 52. The skirt flange 54 extends outwardly from the body 52 to extend past the vent holes 50 opening through the wall of the valve body 24. Thus, when high pressure fluid vents from the valve chamber 30 through the vent holes 50, the skirt flange 54, being juxtaposed opposite the vent holes 50, deflects the high pressure fluid stream along the exterior of the valve body 24 as illustrated in FIG. 3.

Without the skirt flange 54, the high pressure fluid streams venting through the vent holes 50 would discharge radially outwardly and could expose service personnel in proximity to the PRV 20 to the high pressure fluid, which in a refrigerant vapor compression system could also be a high temperature refrigerant vapor. With the PRV 20 having a skirt flange 54 being installed in a vertical orientation, the high pressure fluid streams impacting upon the radially inner surface 56 of the skirt flange 54 are directed along the exterior of the body of the PRV 20 and thus deflected away from personnel in proximity to the PRV 20, thus reducing the potential for exposure to the high pressure fluid.

The protective cap 22 is secured to the PRV 20 disclosed herein by threading the protective cap 22 to distal end 28 of the valve body 24 either directly or indirectly through the cap screw 60. The protective cap 22 cannot be adequately and reliably secured to the distal end 28 of the valve body 24 by a simple interference fit between the exterior surface of the distal end 28 of the valve body 24 and the interior surface of the protective cap 22 due to the high pressure of the fluid venting into the valve chamber 30 in the event the PRV 20 actuates. A cap held by a simple interference fit could be blown off the pressure relief valve.

In the embodiment depicted in FIG. 3, the closed end of the body 52 of the protective cap 22 has a threaded recess 62 formed in the inside face 64 of the protective cap 22 facing the open distal end 28 of the valve body 24. In this embodiment, the protective cap 22 is secured to the valve body 24 by aligning the recess 62 with the exteriorly thread end of the set screw 60 protruding from the open distal end 28 of the valve body 24 and threading the protective cover 22 onto the exteriorly threaded set screw 60, which itself is threaded into the open distal end 28 of the valve body 24 as hereinbefore described. In this manner, the protective cap 22 is indirectly secured to the valve body 24 through the set screw 60.

The body 52 of the protective cap 22 defines an inner circumferential surface 66 that extends longitudinally from the inside face 64 toward the valve body 24. The inner circumferential surface 66 extends parallel to and in spaced relationship with outer circumferential surface 68 of a tip portion of the distal end 28 of the valve body 24. The inner circumferential surface 66 is juxtaposed radially outboard of and in spaced relationship with the outer circumference surface 68 thereby forming a gap therebetween. To protect both the threads between the cap 22 and the set screw 60 and the threads between the set screw 60 and the distal end 28 of the valve body 24, a circumferential seal member 70, for example a compressible O-ring seal formed of an elastomeric material, is disposed in a circumferential recess 72 and extends radially outward to contact in sealing relationship the inner circumferential wall 66 of the body 52 of the protective cap 22. So positioned, the circumferential seal member 70 seals the gap between the inner circumferential surface 66 of the body 52 of the protective cap 22 and the outer circumferential surface 68 of the distal end 28 of the valve body 24.

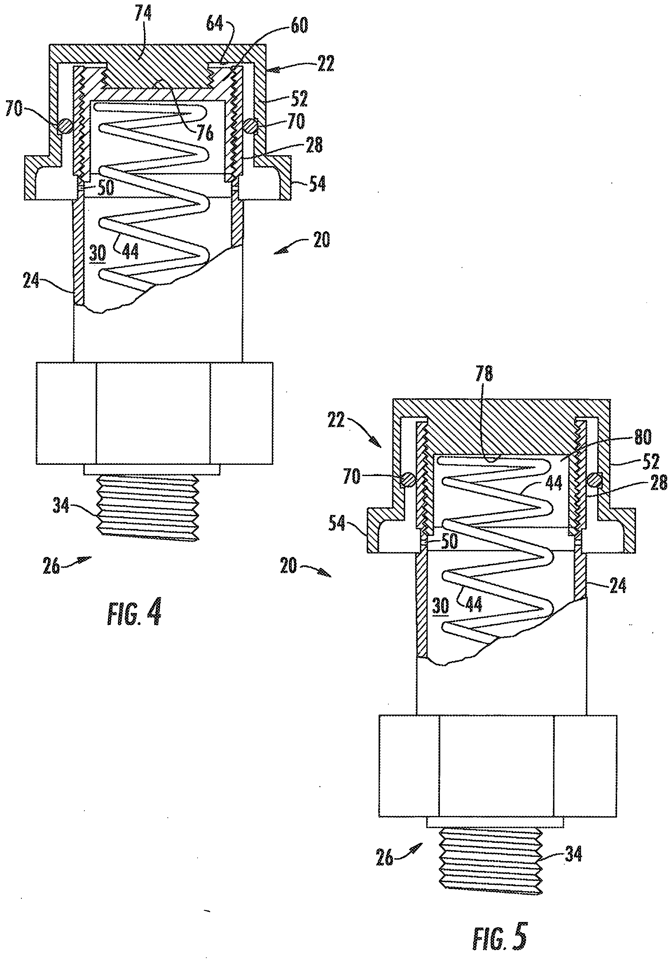

In the embodiment of the PRV 20 depicted in FIG. 3, the protective cap 22 is indirectly secured to the valve body 24 through the set screw 60 as described hereinbefore. However, other embodiments are contemplated for securing the protective cap 22 disclosed herein to the distal end 28 of the valve body 24, such as, for example, as depicted in FIGs. 4-5. In the embodiment depicted in FIG. 4, the closed end of the body 52 of the protective cap 22 has a threaded head 74 formed on and extending axially outwardly from the inside face 64 of the protective cap 22 facing the open distal end 28 of the valve body 24. In this embodiment, the protective cap 22 is secured to the valve body 24 by aligning the threaded head 74 with an interiorly threaded recess 76 in the end face of the set screw 60 and threading the protective cover 22 into the interiorly threaded set screw 60, which itself is threaded into the open distal end 28 of the valve body 24 as hereinbefore described. In this manner, the protective cap 22 is again indirectly secured to the valve body 24 through the set screw 60.

However, in the embodiment of the PRV 22 depicted in FIG. 5, the protective cap 22 is directly secured to the valve body 24. In this embodiment, the set screw 60 is formed integrally with the body 52 of the protective cap 22. The set screw 60 is formed as exteriorly threaded head portion 78 of the body 52 that extends axially outwardly from the inside face 64 off the body 52 of the protective cap 22. The head portion 78 includes an open cavity 80 for receiving a distal end of the compression spring 44 when the protective cap 22 is installed on the PRV 20. To install the protective cap 22 on the PRV 20, the protective cap 22 is axially aligned with the open distal end 28 of the valve body 24 such that the cavity 80 is positioned to receive the distal end of the compression spring 44 and then threaded into the interiorly threaded tip of the distal end 28 of the valve body 24 thereby securing the protective cap 22 to the valve body 24 with the skirt flange 54 extending past the vent holes 50. In this embodiment, the bias force exerted by the compression spring 44 on the valve sealing member 46 (see FIG. 2) is adjusted by turning the protective cap 22 to adjust the depth of insertion of the head portion 78 into the open end of the distal end 28 of the valve body 24 to further compress or to relax the compression spring 44, as desired.

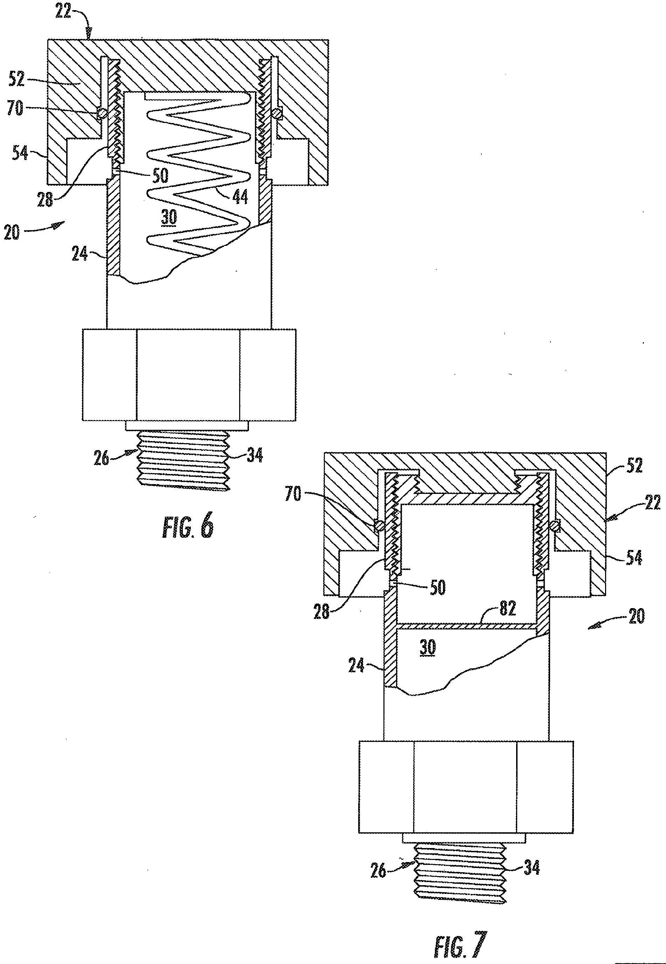

In FIGs. 6 and 7, the exterior configuration of the protective cap 22 differs somewhat from the exterior configuration of the protective cap 22 as illustrated in FIGs. 1-5. It is to be understood that the exterior configuration of the protective cap 22 is not germane to the invention and may take any desired shape so long a skirt flange 54 is provided with an inside surface juxtaposed opposite the vent holes 50. In each of FIGs. 1-7, the inside surface 56 of the skirt flange 54 is juxtaposed opposite the vent holes 50 in radially outwardly spaced relationship from the exterior surface of the valve body 24. The specific magnitude of the spacing is a matter of design choice. The spacing should be large enough that a service technician may readily observe the vent holes 50, but small enough to ensure that a stream of high pressure fluid exiting through a vent hole 50 in the event the PRV 22 actuates will be deflected by the inside surface 56 of the skirt 54 in a direction generally along the exterior surface of the valve body 24.

Visibility of the vent holes 50 is desirable, as the vent holes 50 may be covered with a visual actuation indicator covering, such as for example a piece of tape (not shown), which is readily blown away when the PRV 20 actuates. Absence of the visual actuation indicator conveys to service personnel that the PRV 20 has actuated. Visibility of vent holes 50 is desirable as the absence of the visual actuation indicator may be the only indication that a self-reseating PRV 20 has previously actuated, thereby indicating a possible problem with the system on which the PRV 20 is installed.

In FIGs. 1-6, the PRV 20 having a protective cap 22 as disclosed herein is shown for purposes of illustration, but not limitation, as comprising a spring loaded pressure relief valve. It is contemplated that the protective cap 22 may be used in connection with other types of pressure relief valves. For example, in the embodiment depicted in FIG. 7, the PRV 20 comprises a rupture disc type pressure relief valve. In the embodiment depicted in FIG. 7, the compression spring and the seal member are replaced with a conventional rupture disc 82 disposed within or at the inlet to the valve chamber 30. In the event that the disc 82 ruptures, as in response to an over-pressure condition within the conduit 10, high pressure vapor would be expelled from the conduit 10 through the valve chamber 30 and discharged through the vent holes 50 to the environment exterior of the valve body 24. The discharging high pressure fluid would be deflected by the inside surface 56 of the skirt flange 54 along the exterior of the valve body 24 and away from personnel who might be in proximity to the PRV 20.

It is to be understood that it is not necessary to deflect the high pressure fluid substantially parallel to the longitudinal axis of the valve body 24. Rather, to protect service personnel from potential exposure to high pressure fluid in the event of the actuation of the PRV 20, the skirt flange 54 should be orientated in consideration of the orientation of the PRV 20 itself such that high pressure fluid exhausted through the vent holes 50 would be deflected by the inside surface 56 of the skirt flange 54 in a direction most likely to avoid contact with service personnel who might be in the vicinity of the PRV 20.

In the embodiments of the PRV 20 as depicted in FIGs. 1-7, the protective cap 22 provides both personnel protection against exposure to high pressure fluid through the provision of the skirt flange 54 and corrosion protection for the PRV 20 itself through the provision of the valve sealing member 70 disposed between the inner surface of the protective cap 22 and the exterior surface of the distal end 28 of the valve body 24. However, the skirt flange 54 may be embodied for personnel protection in a protective cap for a pressure relief valve employing a different sealing means. Similarly, the valve sealing member 70 disposed as disclosed herein may be incorporated on pressure relief valves having a cap that does not incorporate a skirt flange as disclosed herein.

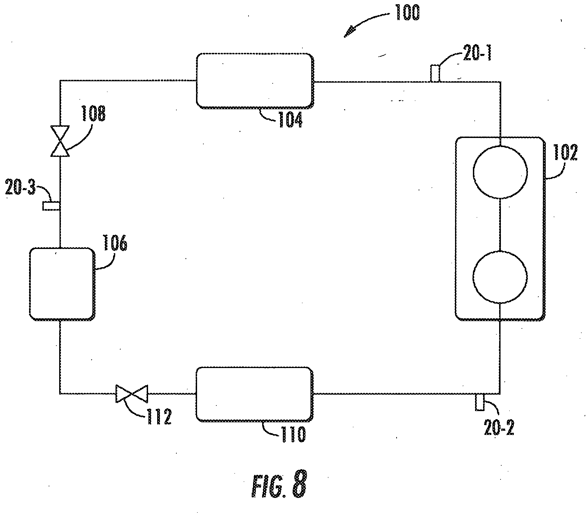

As mentioned previously, the PRV 20 disclosed herein is particularly suited for use in connection with refrigerant vapor compression systems operating at high refrigerant pressures and exposed to harsh environmental conditions. Referring now to FIG. 8, there is depicted a refrigerant vapor compression system 100 charged with carbon dioxide as a refrigerant and used in connection with transport refrigerant units for refrigerating air drawn from and supplied to the cargo box of a truck, trailer, sea-going container, intermodal container or other refrigerated transport container, referred to herein by the common term "refrigerated transport container". The refrigerant vapor compression system 100 may be charged with carbon dioxide as the refrigerant and may be designed for operation in a transcritical cycle.

In the depicted embodiment, the refrigeration vapor compression system includes a compression device 102, a refrigerant vapor cooler heat exchanger 104, a flash tank economizer 106, an economizer expansion device 108, a refrigerant evaporator heat exchanger 110, and an evaporator expansion device 112 disposed in a closed refrigerant flow circuit 114 as depicted in FIG. 8 in a conventional refrigeration cycle. The refrigerant heat absorption heat exchanger functions as a refrigerant evaporator and is disposed in heat exchange relationship with air to be cooled and supplied to the cargo box of the refrigerated transport container. Pressure relief valves 20, equipped with protective caps as disclosed herein, may be installed at various locations throughout the refrigerant flow circuit.

For example, in the embodiment depicted in FIG. 8, a PRV 20 (designated 20-1) is installed in a high pressure side of the refrigerant flow circuit between the discharge outlet of the compression device 102 and the inlet to the refrigerant vapor cooler heat exchanger 104, a PRV 20 (designated 20-2) is installed in a low pressure side of the refrigerant flow circuit between the outlet of the refrigerant evaporator heat exchanger 110 and the suction inlet to the compression device 102, and a PRV 20 (designated 20-3) is installed in an intermediate pressure side of the refrigerant flow circuit between the outlet of the economizer expansion device 108 and the inlet to the flash tank economizer 106. In an embodiment, the pressure relief valve 20-1 is configured to when exposed to a predetermined pressure level in the refrigerant circuit selected in the range from about 2200 psia (pounds per square inch atmospheric) to about 2500 psia (about 152 to about 172 bars). In an embodiment, the pressure relief valve 20-2 is configured to when exposed to a predetermined pressure level in the refrigerant circuit selected in the range from about 1300 psia to about 1500 psia (about 90 to about 103 bars).

The terminology used herein is for the purpose of description, not limitation. Specific structural and functional details disclosed herein are not to be interpreted as limiting, but merely as basis for teaching one skilled in the art to employ the present invention. Those skilled in the art will also recognize the equivalents that may be substituted for elements described with reference to the exemplary embodiments disclosed herein without departing from the scope of the present invention.

While the present invention has been particularly shown and described with reference to the exemplary embodiments as illustrated in the drawing, it will be recognized by those skilled in the art that various modifications may be made without departing from the scope of the invention. Therefore, it is intended that the present disclosure not be limited to the particular embodiment(s) disclosed as, but that the disclosure will include all embodiments falling within the scope of the appended claims.

## Claims

1. A pressure relief valve (20) for use in connection with a high pressure fluid system comprising:
a valve body (24) extending along a longitudinal axis and defining a valve chamber (30), said valve body (24) having a proximal end (26) and a distal end (28) longitudinally opposite said proximal end (26), said distal end (28) having at least one vent hole (50) opening through said distal end (28) and providing a fluid flow passage for venting high pressure fluid from the valve chamber (30) to an environment exterior of the valve body (24) in a direction generally transverse to the longitudinal axis; and
a protective cap (22) mounted to said distal end (28), said protective cap (22) having a skirt flange (54) disposed in spaced relationship to said distal end (28) and defining a surface juxtaposed opposite the at least one vent hole (50) for deflecting high pressure fluid venting from the valve chamber (24) through the at least one vent hole (50) away from an outwardly directed path generally transverse to the longitudinal axis of the valve body (24);
wherein said protective cap (22) comprises a cylindrical cap body (52) secured to said distal end (28) of the valve body (24), the cap body having a closed base end and an open end, said skirt flange (54) extending circumferentially about the open end of the cap body; wherein the open distal end (28) of the valve body (24) is provided with internal threads; a set screw (60) being provided with external threads, the set screw (60) being threaded into the open distal end (28) of the valve body (24); and **characterized in that**
the inner circumferential surface (66) of the protective cap (22) is juxtaposed radially outboard of and in spaced relationship with the outer circumferential surface (68) of the tip portion of the distal end (28) of the valve body (24) thereby forming a gap therebetween;
a circumferential seal member (70) is disposed between the inner circumferential surface (66) of the cap body and the outer circumferential surface (68) of said distal end (28) of the valve body (24);
the closed base end of the cap body (52) has a threaded recess (62) formed in the inside face (64) of the protective cap (22) facing the open distal end (28) of the valve body (24); the threaded recess (62) of the protective cap (22) being threaded onto the external threads of the set screw (60), or
said closed base end of the cap body (52) has a threaded head (74) formed on and extending axially outwardly from the inside face (64) of the protective cap (22) facing the open distal end (28) of the valve body (24), said threaded head (74) of the protective cap (22) being threaded into the interiorly threaded set screw (60).

2. The pressure relief valve (20) as set forth in claim 1 wherein said surface defined by said skirt flange (54) extends generally parallel to the longitudinal axis of the valve body (24).

3. The pressure relief valve (20) as set forth in claim 1 wherein the at least one vent hole (50) comprises a plurality of circumferentially spaced vent holes (50) disposed about a circumference of said distal end (28) of the valve body (24); and
said skirt flange (54) comprises a circumferential extending flange circumscribing said distal end (28) of the valve body (24).

4. The pressure relief valve (20) as set forth in claim 1 wherein said surface defined by said skirt flange (54) deflects high pressure fluid venting from the valve chamber (30) through the at least one vent hole (50) in a direction generally toward a proximal end (26) of the valve body (24).

5. The pressure relief valve (20) as set forth in claim 1 wherein said surface defined by said skirt flange (54) deflects high pressure fluid venting from the valve chamber (30) through the at least one vent hole (50) in a direction generally along an exterior surface of the valve body (24).

6. The pressure relief valve (20) as set forth in claim 1 wherein the cap body is threaded directly to said distal end (28) of the valve body (24).

7. The pressure relief valve (20) as set forth in claim 1 wherein the cap body is threaded to an intermediate member and the intermediate member is threaded directly to said distal end (28) of the valve body (24).

8. The pressure relief valve (20) as set forth in claim 1 wherein the circumferential seal member (70) comprises a compressible O-ring seal.

9. A refrigerant vapor compression system (100) comprising:
a refrigerant circuit charged with carbon dioxide as a refrigerant and having in serial refrigerant flow relationship a compression device (102) for compressing a refrigerant, a refrigerant heat rejection heat exchanger (104), a first expansion device (112), an economizer (106), a second expansion device (108), and a refrigerant heat absorption heat exchanger (110) disposed in heat exchange relationship with air to be refrigerated and supplied to a cargo box of a refrigerated transport container; and
at least one pressure relief valve (20) according to any of the previous claims disposed in said refrigerant circuit for relieving pressure therein when the pressure exceeds a predetermined pressure level.

10. The refrigerant vapor compression system as set forth in claim 9 wherein said at least one pressure relief valve (20) includes a pressure relief disposed between the compression device (102) and the refrigerant heat rejection heat ex-changer (104), said pressure relief valve (20) configured to actuate when exposed to a predetermined pressure level in the refrigerant circuit selected in the range from about 2200 psia (152 bar) to about 2500 psia (172 bar).

11. The refrigerant vapor compression system as set forth in claim 9 wherein said at least one pressure relief valve (20) includes a pressure relief disposed between the refrigerant heat absorption heat exchanger (110) and the compression device (102), said pressure relief valve (20) configured to actuate when exposed to a predetermined pressure level in the refrigerant circuit selected in the range from about 1300 psia (90 bar) to about 1500 psia (103 bar).

12. The refrigerant vapor compression system as set forth in claim 9 wherein said at least one pressure relief valve (20) includes a pressure relief disposed between the first expansion device (112) and the economizer (106).

## Patentansprüche

1. Druckentspannungsventil (20) zur Verwendung in Verbindung mit einem Hochdruckfluidsystem, umfassend:
einen Ventilkörper (24), der sich entlang einer Längsachse erstreckt und eine Ventilkammer (30) definiert, wobei der Ventilkörper (24) ein proximales Ende (26) und ein distales Ende (28) aufweist, das längs gegenüber dem proximalen Ende (26) angeordnet ist, wobei das distale Ende (28) wenigstens eine Ablassöffnung (50) durch das distale Ende (28) aufweist und einen Fluiddurchlass zum Ablassen von Hochdruckfluid aus der Ventilkammer (30) an eine Umgebung außerhalb des Ventilkörpers (24) in einer Richtung allgemein quer zur Längsachse bereitstellt; und
eine Schutzkappe (22), die am distalen Ende (28) angebracht ist, wobei die Schutzkappe (22) einen Einfassungsflansch (54) aufweist, der in einem beabstandeten Verhältnis zu dem distalen Ende (28) angeordnet ist und eine Fläche definiert, die benachbart gegenüber der wenigstens einen Ablassöffnung (50) angeordnet ist, um Hochdruckfluid, das aus der Ventilkammer (24) abgelassen wird, durch die wenigstens eine Ablassöffnung (50) von einem nach außen gerichteten Weg abzulenken, der allgemein quer zu der Längsachse des Ventilkörpers (24) verläuft;
wobei die Schutzkappe (22) einen zylindrischen Kappenkörper (52) umfasst, der an dem distalen Ende (28) des Ventilkörpers (24) befestigt ist, wobei der Kappenkörper ein geschlossenes Basisende und ein offenes Ende aufweist, wobei sich der Einfassungsflansch (54) in Umfangsrichtung um das offene Ende des Kappenkörpers erstreckt; wobei das offene distale Ende (28) des Ventilkörpers (24) mit einem Innengewinde versehen ist; eine Stellschraube (60) mit einem Außengewinde versehen ist, wobei die Stellschraube (60) in das offene distale Ende (28) des Ventilkörpers (24) geschraubt ist, und **dadurch gekennzeichnet, dass**
die Innenumfangsfläche (66) der Schutzkappe (22) radial außerhalb von und in beabstandetem Verhältnis gegenüber der Außenumfangsfläche (68) des Spitzenabschnitts des distalen Endes (28) des Ventilkörpers (24) angeordnet ist und dadurch einen Spalt dazwischen bildet;
ein Umfangsdichtungselement (70) zwischen der Innenumfangsfläche (66) des Kappenkörpers und der Außenumfangsfläche (68) des distalen Endes (28) des Ventilkörpers (24) angeordnet ist;
das geschlossene Basisende des Kappenkörpers (52) eine mit einem Gewinde versehene Vertiefung (62) aufweist, die in der Innenfläche (64) der Schutzkappe (22) gebildet ist und dem offenen distalen Ende (28) des Ventilkörpers (24) zugewandt ist; wobei die mit einem Gewinde versehene Vertiefung (62) der Schutzkappe (22) auf das Außengewinde der Stellschraube (60) geschraubt ist, oder
das geschlossene Basisende des Kappenkörpers (52) einen mit einem Gewinde versehenen Kopf (74) aufweist, der an der Innenfläche (64) der Schutzkappe (22) gebildet ist und sich von dieser axial nach außen erstreckt und dem offenen distalen Ende (28) des Ventilkörpers (24) zugewandt ist, wobei der mit einem Gewinde versehene Kopf (74) der Schutzkappe (22) in die mit Innengewinde versehene Stellschraube (60) geschraubt ist.

2. Druckentspannungsventil (20) nach Anspruch 1, wobei die Fläche, die von dem Einfassungsflansch (54) definiert wird, sich allgemein parallel zu der Längsachse des Ventilkörpers (24) erstreckt.

3. Druckentspannungsventil (20) nach Anspruch 1 wobei die wenigstens eine Ablassöffnung (50) eine Vielzahl von in Umfangsrichtung beabstandeten Ablassöffnungen (50) umfasst, die um einen Umfang des distalen Endes (28) des Ventilkörpers (24) angeordnet sind; und
wobei der Einfassungsflansch (54) einen sich in Umfangsrichtung erstreckenden Flansch umfasst, der das distale Ende (28) des Ventilkörpers (24) einfasst.

4. Druckentspannungsventil (20) nach Anspruch 1 wobei die Fläche, die der Einfassungsflansch (54) definiert, Hochdruckfluid, das aus der Ventilkammer (30) durch die wenigstens eine Ablassöffnung (50) abgelassen wird, in eine Richtung allgemein zu einem proximalen Ende (26) des Ventilkörpers (24) ablenkt.

5. Druckentspannungsventil (20) nach Anspruch 1 wobei die Fläche, die der Einfassungsflansch (54) definiert, Hochdruckfluid, das aus der Ventilkammer (30) durch die wenigstens eine Ablassöffnung (50) abgelassen wird, in eine Richtung allgemein entlang einer Außenfläche des Ventilkörpers (24) ablenkt.

6. Druckentspannungsventil (20) nach Anspruch 1, wobei der Kappenkörper direkt in das distale Ende (28) des Ventilkörpers (24) geschraubt ist.

7. Druckentspannungsventil (20) nach Anspruch 1, wobei der Kappenkörper auf ein Zwischenelement geschraubt wird und das Zwischenelement direkt auf das distale Ende (28) des Ventilkörpers (24) geschraubt ist.

8. Druckentspannungsventil (20) nach Anspruch 1, wobei das Umfangsdichtungselement (70) eine zusammendrückbare O-Ring-Dichtung umfasst.

9. Kältemitteldampfkompressionssystem (100), umfassend:
einen Kältemittelkreislauf, der mit Kohlendioxid als ein Kältemittel befüllt ist und in einer Kältemittelfluss-Anordnungsbeziehung hintereinander eine Verdichtungseinrichtung (102) zum Verdichten eines Kältemittels, einen Kältemittelwärmeabführungswärmetauscher (104), eine erste Expansionseinrichtung (112), einen Economiser (106), eine zweite Expansionseinrichtung (108) und einen Kältemittelwärmeabsorptionswärmetauscher (110) aufweist, der in einer Wärmetauschbeziehung mit zu kühlender Luft angeordnet ist, die einer Frachtbox eines gekühlten Transportcontainers zugeführt wird; und
wenigstens ein Druckentspannungsventil (20) nach einem der vorangehenden Ansprüche, das in dem Kältemittelkreislauf angeordnet ist, um Druck darin zu entspannen, wenn der Druck einen vorgegebenen Druckpegel übersteigt.

10. Kältemitteldampfkompressionssystem nach Anspruch 9, wobei das wenigstens eine Druckentspannungsventil (20) eine Druckentspannung beinhaltet, die zwischen der Verdichtungseinrichtung (102) und dem
Kältemittelwärmeabführungswärmetauscher (104) angeordnet ist, wobei das Druckentspannungsventil (20) dazu konfiguriert ist, aktiviert zu werden, wenn es einem vorgegebenen Druckpegel im Kältemittelkreislauf ausgesetzt wird, der in dem Bereich von etwa 2200 psia (152 bar) bis etwa 2500 psia (172 bar) ausgewählt ist.

11. Kältemitteldampfkompressionssystem nach Anspruch 9, wobei das wenigstens eine Druckentspannungsventil (20) eine Druckentspannung zwischen dem Kältemittelwärmeabsorptionswärmetauscher (110) und der Verdichtungseinrichtung (102) beinhaltet, wobei das Druckentspannungsventil (20) dazu konfiguriert ist, aktiviert zu werden, wenn es einem vorgegebenen Druckpegel im Kältemittelkreislauf ausgesetzt wird, der in dem Bereich von etwa 1300 psia (90 bar) bis etwa 1500 psia (103 bar) ausgewählt ist.

12. Kältemitteldampfkompressionssystem nach Anspruch 9, wobei das wenigstens eine Druckentspannungsventil (20) eine Druckentspannung beinhaltet, die zwischen der ersten Expansionseinrichtung (112) und dem Economiser (106) angeordnet ist.

## Revendications

1. Soupape de détente de pression (20) pour une utilisation en raccordement avec un système de fluide haute pression comprenant:
un corps de soupape (24) s'étendant le long d'un axe longitudinal et définissant une chambre de soupape (30), ledit corps de soupape (24) ayant une extrémité proximale (26) et une extrémité distale (28) longitudinalement opposée à ladite extrémité proximale (26), ladite extrémité distale (28) ayant au moins un trou d'évent (50) s'ouvrant à travers ladite extrémité distale (28) et fournissant un passage d'écoulement de fluide pour décharger un fluide haute pression de la chambre de soupape (30) à un environnement extérieur au corps de soupape (24) dans une direction généralement transversale à l'axe longitudinal; et
un capuchon protecteur (22) monté sur ladite extrémité distale (28), ledit capuchon protecteur (22) ayant une bride à jupe (54) disposée dans une relation espacée par rapport à ladite extrémité distale (28) et définissant une surface juxtaposée à l'opposé de l'au moins un trou d'évent (50) pour dévier un fluide haute pression se déchargeant de la chambre de soupape (24) à travers le au moins trou d'évent (50) en éloignement d'un chemin dirigé vers l'extérieur généralement transversal à l'axe longitudinal du corps de soupape (24);
dans laquelle ledit capuchon protecteur (22) comprend un corps de capuchon cylindrique (52) assujetti à ladite extrémité distale (28) du corps de soupape (24), le corps de capuchon ayant une extrémité de base fermée et une extrémité ouverte, ladite bride à jupe (54) s'étendant circonférentiellement autour de l'extrémité ouverte du corps de capuchon; dans laquelle l'extrémité distale ouverte (28) du corps de soupape (24) est pourvue de filets internes; une vis de pression (60) étant pourvue de filets externes, la vis de pression (60) étant filetée dans l'extrémité distale ouverte (28) du corps de soupape (24); et **caractérisée en ce que**
la surface circonférentielle interne (66) du capuchon protecteur (22) est juxtaposée radialement vers l'extérieur de et en relation espacée avec la surface circonférentielle externe (68) de la portion d'embout de l'extrémité distale (28) du corps de soupape (24) formant ainsi un espacement entre eux;
un organe formant joint circonférentiel (70) est disposé entre la surface circonférentielle interne (66) du corps de capuchon et la surface circonférentielle externe (68) de ladite extrémité distale (28) du corps de soupape (24);
l'extrémité de base fermée du corps de capuchon(52) a un évidement fileté (62) formé dans la face intérieure (64) du capuchon protecteur (22) en regard de l'extrémité distale ouverte (28) du corps de soupape (24); l'évidement fileté (62) du capuchon protecteur (22) étant fileté sur les filets externes de la vis de pression (60), ou
ladite extrémité de base fermée du corps de capuchon (52) a une tête filetée (74) formée sur et s'étendant axialement vers l'extérieur de la face intérieure (64) du capuchon protecteur (22) en regard de l'extrémité distale ouverte (28) du corps de soupape (24), ladite tête filetée (74) du capuchon protecteur (22) étant filetée dans la vis de pression (60) filetée intérieurement.

2. Soupape de détente de pression (20) selon la revendication 1, dans laquelle ladite surface définie par ladite bride à jupe (54) s'étend généralement parallèlement à l'axe longitudinal du corps de soupape (24).

3. Soupape de détente de pression (20) selon la revendication 1, dans laquelle le au moins un trou d'évent (50) comprend une pluralité de trous d'évent espacés circonférentiellement (50) disposés autour d'une circonférence de ladite extrémité distale (28) du corps de soupape (24); et
ladite bride à jupe (54) comprend une bride s'étendant circonférentiellement circonscrivant ladite extrémité distale (28) du corps de soupape (24).

4. Soupape de détente de pression (20) selon la revendication 1, dans laquelle ladite surface définie par ladite bride à jupe (54) dévie un fluide haute pression se déchargeant de la chambre de soupape (30) à travers le au moins un trou d'évent (50) dans une direction généralement vers une extrémité proximale (26) du corps de soupape (24).

5. Soupape de détente de pression (20) selon la revendication 1, dans laquelle ladite surface définie par ladite bride à jupe (54) dévie un fluide haute pression se déchargeant de la chambre de soupape (30) à travers le au moins un trou d'évent (50) dans une direction généralement le long d'une surface extérieure du corps de soupape (24).

6. Soupape de détente de pression (20) selon la revendication 1, dans laquelle le corps de capuchon est fileté directement sur ladite extrémité distale (28) du corps de soupape (24).

7. Soupape de détente de pression (20) selon la revendication 1, dans laquelle le corps de capuchon est fileté directement sur un organe intermédiaire et l'organe intermédiaire est fileté directement sur ladite extrémité distale (28) du corps de soupape (24).

8. Soupape de détente de pression (20) selon la revendication 1, dans laquelle l'organe formant joint circonférentiel (70) comprend un joint torique compressible.

9. Système de compression de vapeur frigorigène (100) comprenant :
un circuit de fluide frigorigène chargé de dioxyde de carbone en tant que fluide frigorigène et ayant une relation d'écoulement de fluide frigorigène en série avec un dispositif de compression (102) permettant de comprimer un fluide frigorigène, un échangeur de chaleur à rejet de chaleur de fluide frigorigène (104), un premier dispositif de détente (112), un économiseur (106), un second dispositif de détente (108), et un échangeur de chaleur par absorption de chaleur de fluide frigorigène (110) disposés dans une relation d'échange de chaleur avec de l'air à réfrigérer et fourni à une boîte de cargaison d'un conteneur de transport réfrigéré; et
au moins une soupape de détente de pression (20) selon l'une quelconque des revendications précédentes disposée dans ledit circuit de fluide frigorigène permettant d'y détendre la pression lorsque la pression excède un niveau de pression prédéterminé.

10. Système de compression de vapeur frigorigène selon la revendication 9, dans lequel ladite au moins une soupape de détente de pression (20) inclut un limiteur de pression disposé entre le dispositif de compression (102) et l'échangeur de chaleur à rejet de chaleur de fluide frigorigène (104), ladite soupape de détente de pression (20) étant configurée pour s'actionner lorsqu'elle est exposée à un niveau de pression prédéterminé dans le circuit de fluide frigorigène choisi dans la plage d'environ 2 200 psia (152 bars) à environ 2 500 psia (172 bars).

11. Système de compression de vapeur frigorigène selon la revendication 9, dans lequel ladite au moins une soupape de détente de pression (20) inclut un limiteur de pression disposé entre l'échangeur de chaleur par absorption de chaleur de fluide frigorigène (110) et le dispositif de compression (102), ladite soupape de détente de pression (20) étant configurée pour s'actionner lorsqu'elle est exposée à un niveau de pression prédéterminé dans le circuit de fluide frigorigène choisi dans la plage d'environ 1 300 psia (90 bars) à environ 1 500 psia (103 bars).

12. Système de compression de vapeur frigorigène selon la revendication 9, dans lequel ladite au moins une soupape de détente de pression (20) inclut un limiteur de pression disposé entre le premier dispositif de détente (112) et l'économiseur (106).
